# EUROPEAN PATENT APPLICATION

(11) **EP 4 715 573 A1**
(43) Date of publication of application: **25.03.2026**
(21) Application number: 25199576.7
(22) Date of filing: 02.09.2025
(51) Int. Cl.: G06F 8/34, G06F 8/36, G06F 9/54, G06F 8/20, G06F 16/955

(54) **DYNAMIC API & DOCUMENTATION GENERATOR DERIVED FROM THE USER INTERFACE**

(30) Priority: 23.09.2024 US 202418893038
(71) Applicant: ADP, Inc., Roseland, NJ 07068 (US)
(72) Inventor: DENEEN, Charles Bryce, Alpharetta, GA, 30005 (US); VARGO, Donald Frank, Alpharetta, GA, 30005 (US)
(74) Representative: Friese Goeden Patentanwälte PartGmbB

(57) **Abstract**

Systems and methods for generation of a REST API are provided. A graphical user interface for an end user application may be generated, where the graphical user interface includes a displayed property that corresponds to a stored property retrieved from a database. A property selection mode of the graphical user interface may be entered in response to a first user input. The displayed property may be added to a collection of properties for the REST API in response to a selection of the displayed property while in the property selection mode. The REST API may be generated in response to a second user input, wherein API properties of the REST API include all properties added to the collection of properties.

## Description

### TECHNICAL FIELD

This application relates to APIs and, in particular, to generation of APIs.

### BACKGROUND

Present API generation systems suffer from a variety of drawbacks, limitations, and disadvantages. Accordingly, there is a need for inventive systems, methods, components, and apparatuses described herein.

### SUMMARY

Systems and methods for generation of a REST API are provided. A graphical user interface for an end user application may be generated, where the graphical user interface includes a displayed property that corresponds to a stored property retrieved from a database. A property selection mode of the graphical user interface may be entered in response to a first user input. The displayed property may be added to a collection of properties for the REST API in response to a selection of the displayed property while in the property selection mode. The REST API may be generated in response to a second user input, wherein API properties of the REST API include all properties added to the collection of properties.

### BRIEF DESCRIPTION OF THE DRAWINGS

The examples may be better understood with reference to the following drawings and description. The components in the figures are not necessarily to scale. Moreover, in the figures, like-referenced numerals designate corresponding parts throughout the different views.
FIG. 1 illustrates an example of a system for generating a REST API (Representational State Transfer Application Programming Interface);
FIG. 2 illustrates an example of the graphical user interface;
FIG. 3 illustrates an example of the graphical user interface in the property selection mode;
FIG. 4 illustrates an example of the graphical user interface in which the collection of the displayed properties to be included in the REST API persists across pages;
FIG. 5 illustrates a first example of a REST API preview;
FIG. 6 illustrates a first example of a create API form;
FIG. 7 illustrates an example flow diagram of the logic of the system for generation of the REST API;
FIG. 8 illustrates an example of obtaining and using credentials;
FIG. 9 illustrates an example of a GUI for getting started with a request for a new certificate;
FIG. 10 illustrates an example of a GUI for generating a private key;
FIG. 11 illustrates an example of a for obtaining a private key;
FIG. 12 illustrates an example of a GUI for indicating a certificate is being generated;
FIG. 13 illustrates an example of a GUI for viewing or downloading a generated certificate;
FIG. 14 illustrates an example of a GUI for selecting fields from an employee profile;
FIG. 15 illustrates an example of a GUI displaying an employee's employment profile and related fields;
FIG. 16A illustrates an example of a first part of a REST API preview in the form of a JSON document;
FIG. 16B illustrates an example a second part of a REST API preview in the form of a JSON document;
FIG. 16C illustrates an example of a third part of a REST API preview in the form of a JSON document; and
FIG. 17 illustrates a second example of a create API form.

### DETAILED DESCRIPTION

Systems and methods for generation of a custom REST API (Representational State Transfer Application Programming Interface) are provided. A graphical user interface for an end user application, like an enterprise application, may be generated. The graphical user interface includes one or more displayed properties that correspond to one or more stored properties retrieved from a database. A property selection mode of the graphical user interface may be entered in response to a first user input, such as a press of a button. Any of the displayed properties may be added to a collection of properties for the REST API in response to a selection of the displayed property while in the property selection mode. The REST API may be generated in response to a second user input, such as a press of a create API button. API properties of the REST API may include all properties added to the collection of properties.

One technical advantage of the systems and methods described below may be that software component interaction with the end user application via APIs may be improved. For examples, names of properties in the APIs are not always clearly aligned with the names of the fields or properties displayed in the graphical user interface, thereby causing potential defects in software invoking the APIs because incorrect fields names may be used when invoking the APIs.

Another technical advantage of the systems and methods described below may be improved performance when interacting with dynamically created APIs because of excess data returned in standard APIs implemented in the end user application. For example, more data may be included in the standard APIs than a software component needs. In one such example, a software component accessing the end user application via an API may want to fetch only demographics data, but the API that returns the demographics data may also return pay information with the demographics data. Yet another technical advantage of the systems and methods described below may be automatically generated documentation of the dynamically created APIs. The technical advantages may not be necessarily present in every scenario.

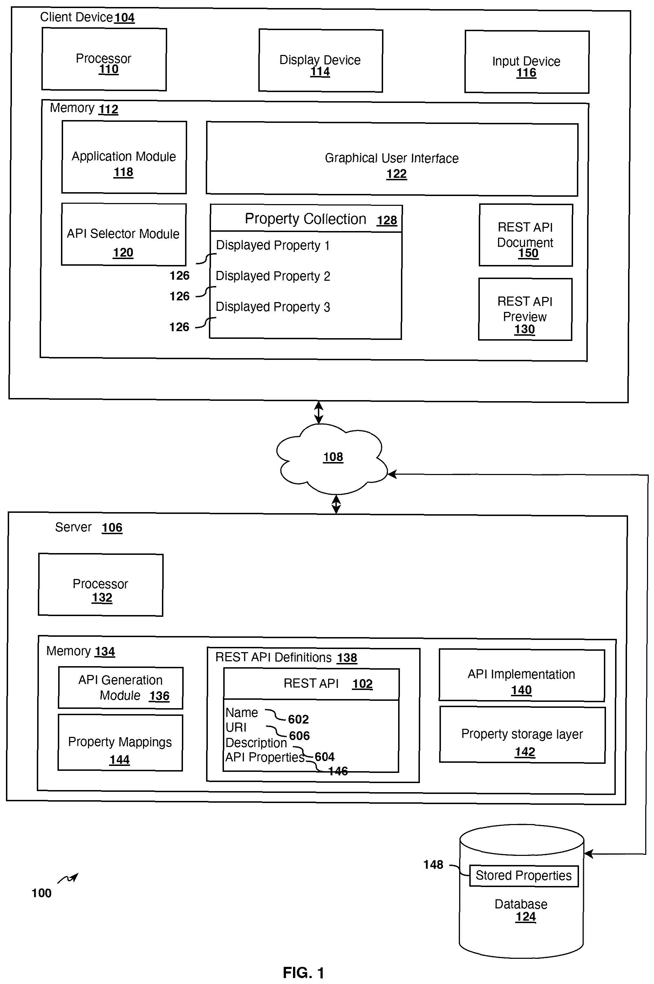

FIG. 1 illustrates an example of a system 100 for generating a REST API 102 (Representational State Transfer Application Programming Interface). The system 100 in FIG. 1 includes a client device 104 and a server 106. The client device 104 may communicate with the server 106 over a network 108.

The client device 104 may include a processor 110, a memory 112, a display device 114, and an input device 116. The memory 112 may include an application module 118 and an API selector module 120. In some examples, the application module 118 and the API selector module 120 may be part of a browser-based application accessed at the server 106.

The application module 118 may be executable by the processor 110 to generate a GUI 122 (graphical user interface) for an end user application, such as an Enterprise Resource Planning (ERP) system, a human capital management system, a payroll system, a customer relation management system, an enterprise software application, or any other type of application designed for end users as opposed to software developers. The end user application may be any software application other than a developer application.

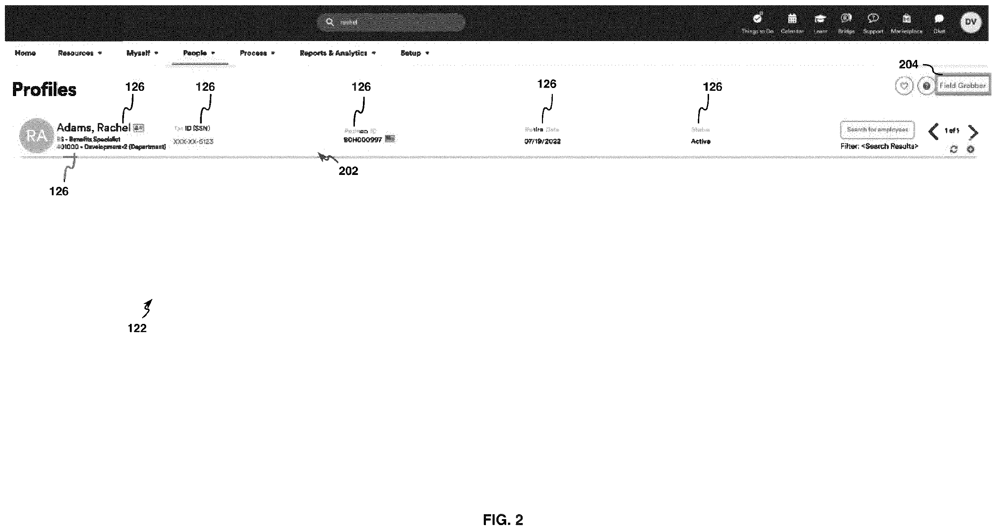

FIG. 2 illustrates an example of the GUI 122, which includes search results 202 from a search for people that satisfy user-entered search criteria. In the example illustrated in FIG. 2, only one person, Rachel Adams, is included in the search results 202.

The API selector module 120 may be any module configured to select properties for inclusion in the REST API 102 based on user input. The API selector module 120 may be executable by the processor 110 to enter a property selection mode of the GUI 122 in response to user input. For example, the API selector module 120 may be executable with the processor 110 to generate a selector graphical control element 204 in the GUI 122, where the selector graphical control element 204 may be any graphical control element, such as a button or a toggle switch, which when selected, causes the API selector module 120 to enter the property selection mode of the GUI 122. In the example shown in FIG. 2, the selector graphical control element 204 is a button labeled "Field Grabber." If the GUI 122 is in the property selection mode, any displayed properties 126 included in the GUI 122 may be selected from the GUI 122 for inclusion in the REST API 102.

If the GUI 122 is in the property selection mode, the GUI 122 may appear the same as, or substantially similar to, the GUI 122 generated when not in the property selection mode. For example, the displayed properties 126 included in the GUI 122 while in the property selection mode may also be included in the GUI 122 while not in the property selection mode. As a result, if an API developer is familiar with the GUI 122 of the end user application, then the API developer is likely to know where to find any of the properties 126 to be included in the REST API 102. Alternatively or in addition, if the GUI 122 of the end user application is user friendly, then the API developer may find any of the displayed properties 126 to be included in the REST API 102 relatively easily by navigating through the GUI 122.

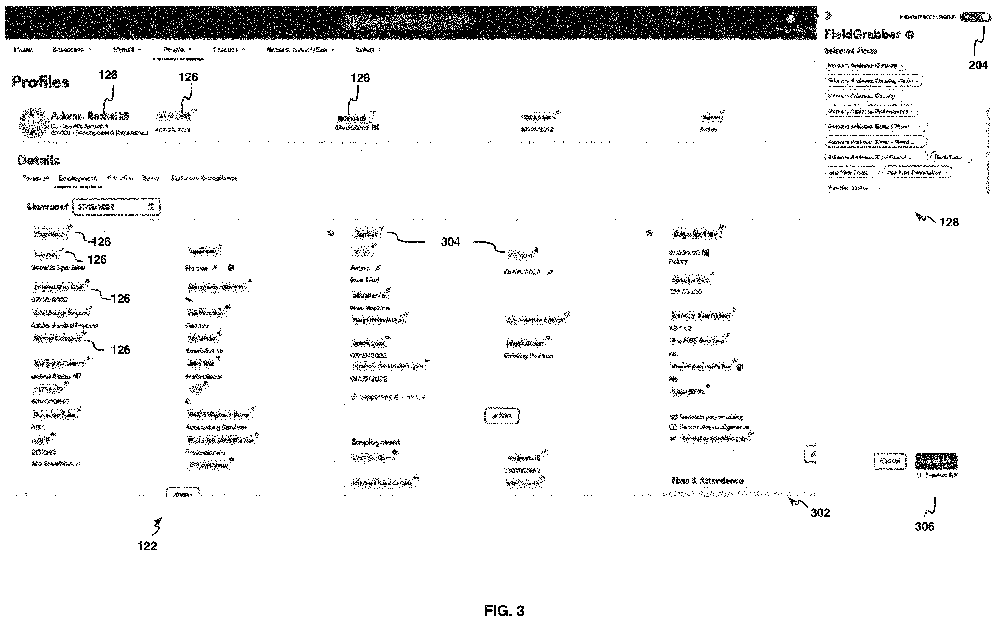

FIG. 3 illustrates an example of the GUI 122 in the property selection mode 302. The GUI 122 includes a profile of an employee and, in particular, employment details about the employee. In the illustrated example, the employee's name is Rachel Adams, and the GUI 122 shown in FIG. 3 was generated in response to selecting the person in the search results shown in FIG. 2.

In the illustrated example, the GUI 122 in the property selection mode 302 looks the same as the GUI 122 not in the property selection mode 302 except for two differences. First, in the property selection mode 302, the displayed properties 126 included in the GUI 122 have an overlay 304. Second, in the property selection mode 302, a collection 128 of the displayed properties 126 selected for inclusion in the REST API 102 are identified in a properties graphical control element 306, such as a fixed panel, a floating panel, a list box, or a picker control. To avoid cluttering FIG. 3, only a subset of the displayed properties 126 and a subset of the overlay 304 are indicated by lead lines and reference numbers.

The overlay 304 may include any graphical indication that the displayed properties 126 are selectable for inclusion in the REST API 102. For example, the displayed properties 126 may be highlighted and/or have adjacent characters or icons, such as an asterisk as shown here, that distinguish the displayed properties 126 from other text in the GUI 122. In some examples, the overlay 304 may visually distinguish the displayed properties 126 that have been selected for inclusion in the REST API 102 from those that have not. In the example shown in FIG. 3, the displayed properties 126 selected for inclusion are highlighted in a color different from the displayed properties 126 not yet selected for inclusion.

As described above, the collection 128 of the displayed properties 126 selected for inclusion in the REST API 102 are identified in the properties graphical control element 306. In some examples, the properties graphical control element 306 is configured to remove any of the displayed properties 126 from the collection 128 of the displayed properties. In particular, the properties graphical control element 306 may remove one or more of the displayed properties 126 from the collection 128 of the displayed properties 126 to be included in the REST API 102 in response to user input. For example, the properties graphical control element 306 shown in FIG. 3 may remove any of the displayed properties 126 from the collection 128 in response to user selection of an "x" adjacent to the name of the displayed property in the properties graphical control element 306 to be removed from the collection 128.

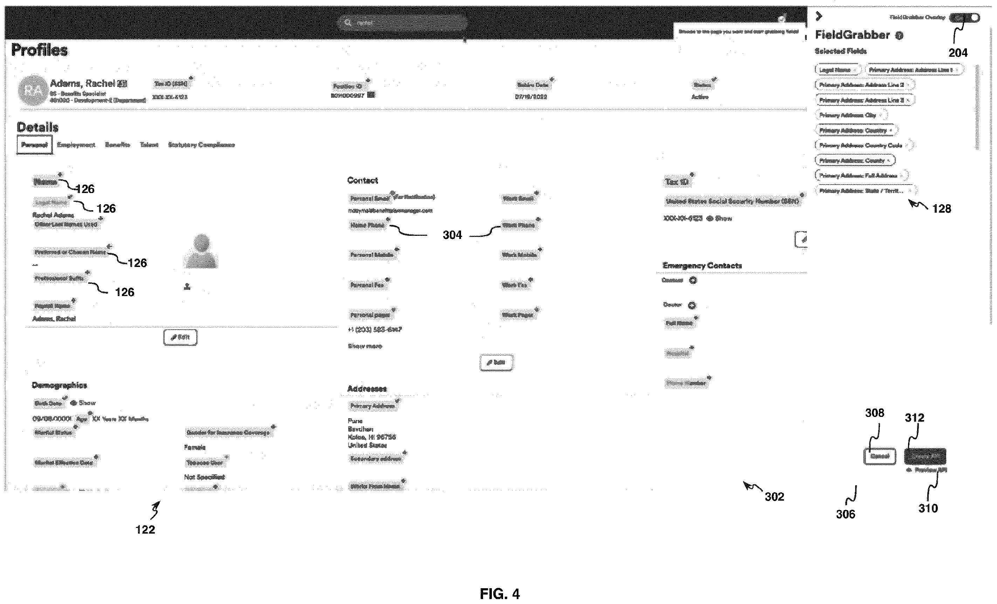

FIG. 4 illustrates an example of the GUI 122 in which the collection 128 of the displayed properties 126 to be included in the REST API 102 persists across pages. As in FIG. 3, the GUI 122 is in the property selection mode 302. The GUI 122 includes a profile of an employee and, in particular, personal details about the employee. In the illustrated example, the employee's name is Rachel Adams, and the page of the GUI 122 shown in FIG. 4 was generated in response to selecting the tab labeled "Personal" in the page of the GUI 122 shown in FIG. 3.

Because the API selector module 120 persists the property collection 128 across pages of the GUI 122, the displayed properties 126 to be included in the REST API 102 may be added to and/or removed from the property collection 128 while navigating through the pages of the end user application. As a result, the collection 128 of properties may include the displayed properties 126 selected from multiple pages of the GUI 122. In some other examples, however, the API selector module 120 may not persist the property collection 128 across pages of the GUI 122.

In some examples, the collection 128 of the displayed properties 126 remains unchanged when entering or exiting the property selection mode 302. Alternatively, the API selector module 120 may empty the collection 128 of the displayed properties 126 when entering and/or exiting the property selection mode 302. Alternatively or in addition, the API selector module 120 may include a cancel graphical control element 308, such as a button. The cancel graphical control element 308 may be included in, for example, the properties graphical control element 306. In response to user input selecting the cancel graphical control element 308, the API selector module 120 may empty the collection 128 of the displayed properties 126 and/or exit the property selection mode 302.

The API selector module 120 may include a preview API control 310 in the GUI 122. Alternatively or in addition, the API selector module 120 may include a create API control 312 in the GUI 122. For example, the preview API control 310 and the GUI 122 may be included in the properties graphical control element 306.

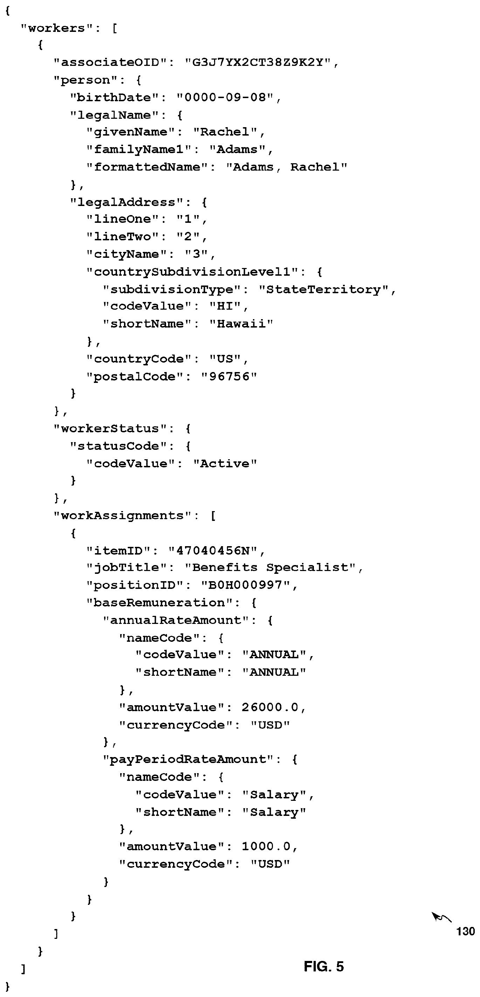

In response to user input, the API selector module 120 may generate, or send a request to the server 106 to generate, a REST API preview 130. For example, in response to a selection of the preview API control 310 by the API developer, the API selector module 120 may generate, or send a request to the server 106 to generate, the REST API preview 130. The REST API preview 130 may include results of a fetch issued to the REST API 102 and/or simulated results of a fetch issued to the REST API 102, where properties returned in REST API preview 130 are specified in the property collection 128. Further in response to the selection of the preview API control 310, the API selector module 120 may cause, for example, a new window to be opened that displays the REST API preview 130. FIG. 5 illustrates an example of the REST API preview 130 in the form of a JSON document.

The API selector module 120 may generate simulated results of the fetch by including values of the displayed properties 126 that were initially fetched and included in the GUI 122 when the displayed properties 126 were selected for inclusion in the REST API 102. Therefore, the API selector module 120 may generate simulated results of the fetch before the REST API 102 is created.

When the API developer is satisfied with the choice of the displayed properties 126 in the property collection 128 to include in the REST API 102, the API developer may indicate to the system 100 to create the REST API 102. Specifically, in response to user input, the API selector module 120 may generate, or send a request to the server 106 to generate, the REST API 102. For example, in response to selection of the create API control 312 by the API developer or other user, the API selector module 120 may generate, or send a request to the server 106 to generate, the REST API 102.

To generate the REST API 102, the API selector module 120 may first gather information used to generate REST API 102 in addition to the property collection 128 previously populated. For example, the API selector module 120, in response to selection of the create API control 312, may generate a create API form, such as dialog box, to gather the additional information.

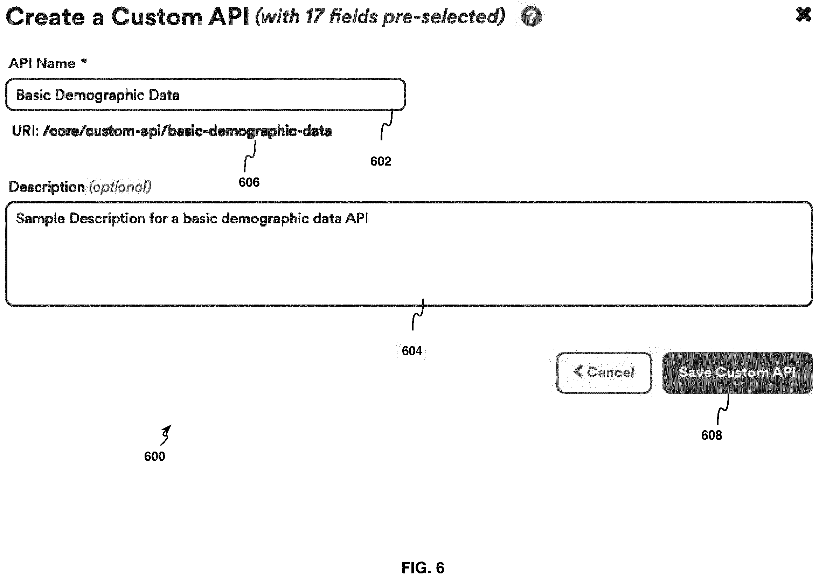

FIG. 6 illustrates an example of a create API form 600 generated by the API selector module 120 in the GUI 122 to gather information in the creation of the REST API 102. The create API form 600 in the illustrated example enables input of an API name 602 and an API description 604. In some examples, the API selector module 120 may generate a URI 606 derived from the API name 602 and include the URI 606 in the create API form 600. A save custom API graphical interface control 608, such as a button, when selected, may cause the API selector module 120 to generate, or send a request to the server 106 to generate, the REST API 102. After creation of the REST API 102, the REST API 102 may be accessible at the URI 606.

The creation of the REST API 102 may be implemented in any number of ways. Referring again to the example in FIG. 1, the API selector module 120 is executable by the processor 110 to generate the REST API 102 by sending a request to the server 106. The server 106 in the illustrated example includes a processor 132 and a memory 134. The memory 134 includes an API generation module 136, REST API definitions 138, an API implementation 140, a property storage layer 142, and property mappings 144.

The API generation module 136 is any module configured to generate the REST API 102. The API generation module 136 may generate the REST API 102 by storing a definition of the REST API 102 in the REST API definitions 138. For example, the definition of the REST API 102 may include the API name 602, the URI 606, the API description 604, and API properties 146. The API properties 146 may be the properties accessible through the REST API 102. The API generation module 136 may receive the API name 602, the URI 606, the API description 604, and the property collection 128 in the request to generate the REST API 102 from the client device 104. In some examples, the API properties 146 may be set by the API generation module 136 to the displayed properties 126 that are included in the property collection 128. In some examples, the API properties 146 included in the REST API 102 may be limited to only the displayed properties in the that are included in the property collection 128.

In the example illustrated in FIG. 1, the server 106 and, in particular, the API implementation 140 may operate as a service that dynamically implements the REST API 102 and any other API having a definition included in the REST API definitions 138. For example, the API implementation 140 may receive a HTTP request to invoke the REST API 102 or any other API defined in the REST API definitions 138. The API implementation 140 may first determine which of the REST APIs defined in the REST API definitions 138 was invoked. For example, in some Java implemented examples, the API implementation 140 may invoke request.getPathInfo(), where request is a HttpServletRequest instance, to obtain the URI that was invoked by the client device 104 or any other client that invoked the REST API 102. The API implementation 140 may then look up the REST API 102 definition by searching the REST API definitions 138 for the URI 606 that matches the invoked URI.

Next, the API implementation 140 may obtain the API properties 146 from the REST API 102 definition having the matching URI. The API properties 146 included in the REST API 102 definition may identity which of the displayed properties 126 are available via the REST API 102.

To obtain values for the API properties 146 and/or to set values for the API properties 146, the API implementation 140 may access corresponding stored properties 148 in a database 124. The server 106 may be in communication with the database 124 over the network 108. The property mappings 144 may be any data structure, such as a hash map, that maps the API properties 146 to the stored properties 148. In some examples of the property mappings 144, there may be a one-to-one mapping between the API properties 146 and the stored properties 148. The names of API properties 146 may not necessarily be the same as the names of the corresponding stored properties 148. In other examples, one or more of the API properties 146 may be obtained as a predetermined function of one or more of the stored properties 148. For example, the predetermined function may be a concatenation function of two of the stored properties 148. In such examples, the property mappings 144 may identify the predetermined function of the one or more of the stored properties 148.

The API implementation 140 may access the stored properties 148 in the database 124 via the property storage layer 142. The property storage layer 142 may include programmatic procedures that translates requests to access one or more stored properties 148 in the database 124 into corresponding native database API calls. Alternatively or in addition, the API implementation 140 may generate database commands, such as SQL commands, and the property storage layer 142 may pass the database commands to the database 124. In such a manner, the API implementation 140 may dynamically implement any API identified in the REST API definitions 138. The property selection mode 302 of the GUI 122 and the dynamic REST API implementation enables easy creation and implementation, respectively, of custom REST APIs.

The API properties 146 of the REST API 102 may span multiple tables in the database 124, span multiple databases, or span any other entity, where join information is needed to properly implement the REST API 102. As the property collection 128 is being constructed by the API selector module 120, the API selector module 120 may keep track of any needed join information. For example, if the API properties 146 include time system data and payroll system data, the API selector module 120 may indicate the API properties 146 may joined on an organization identifier and an associate identifier so that only the employee's pay and time data are provided together. The API selector module 120 may include the join information in the request sent to the server 106 to generate the REST API 102.

In the examples described above, the API properties 146 are set to the displayed properties 126 that are included in the property collection 128 at the creation of the REST API 102. In alternative examples, the API properties 146 may be set to the stored properties 148 in the property mappings 144 that correspond to the displayed properties 126 in the property collection 128.

In some examples, the API generation module 136 may be configured to generate a REST API document 150 describing the REST API 102. The REST API document 150 may be any documentation of the REST API 102. The REST API document 150 may be generated, for example, in response to selection of the create API control 312 and together with the creation of the REST API 102. Examples of the REST API document 150 may include a swagger document, an OpenAPI document, a YAML document, a WSDL document, a JSON schema, a HTML page, an XML document, and any other document that describes the REST API 102. The API generation module 136 may leverage utilities such as Deepkit, TSOA, jsonschema.net, typebox, and Typia to generate the REST API document 150 for the REST API 102.

As explained above, the selector graphical control element 204 may be any graphical control element, such as a button or a toggle switch, which when selected, causes the API selector module 120 to enter the property selection mode of the GUI 122. Alternatively or in addition, the selector graphical control element 204 may be any graphical control element, such as a button or a toggle switch, which when selected, causes the API selector module 120 to exit the property selection mode of the GUI 122. In some examples, in response to selection of the create API control 312, the API selector module 120 may exit the property selection mode 302 in addition to creating the REST API 102.

The displayed properties 126 may be editable by an end user, and the application module 118 may store such edits in the database 124. If the GUI 122 is in the property selection mode 302, any displayed properties 126 included in the GUI 122 may be selected from the GUI 122 for inclusion in the REST API 102. The displayed properties 126 included in the GUI 122 may be displayed using any type of graphical control element, such as a label field, a read only text field, an editable text field, a date control, or any other type of graphical control element. In some examples, the application module 118 may store user edits made to the displayed properties via editable text fields to corresponding stored properties 148 in the database 124. In such examples, the API selector module 120 may add the displayed properties 126 to the property collection 128 in response to selection of the display properties 126 via selection of the editable text fields in the property selection mode 302.

The system 100 may be implemented in many different ways. Further example variations are provided below.

The REST API 102 may be any API that conforms to the constraints of REST architectural style and enables interaction with RESTful web services. An application programming interface (API) defines programmatic rules to follow in communicating with a software service. APIs are created or exposed so that other applications may communicate with the software service programmatically. REST is a software architecture that imposes conditions on how an API works, not a protocol or a standard. When a REST API (also known as a RESTful API) is invoked in a client request, the client request transfers a representation of a state of a resource to web service. The client request including the representation of the state may be delivered in any suitable format, such as JSON (Javascript Object Notation), HTML, XLT, Python, PHP, and/or plain text via HTTP, HTTPS, or any other transfer protocol. JSON is currently the most generally popular format of representation of the state, but any other suitable format may be implemented in the system 100.

As described above, various actions are taken in response to user input. For example, the API selector module 120 may enter and/or exit the property selection mode 302 in response to selection of the selector graphical control element 204 in the GUI 122. However, more broadly, user input may be received in any form. For example, the API selector module 120 may enter the property selection mode 302 in response to pressing a key, such the control key, and exit the property selection mode 302 in response to releasing the key.

The client device 104 and the server 106 may be any computing device. Examples may include a mobile device, a laptop, a phone, a tablet device, a desktop computer, and a rack server.

The processor 110 of the client device 104 may be in communication with the memory 112, the display device 114, and the input device 116. The processor 132 of the server 106 may be in communication with the memory 134 of the server 106.

The processor 110 of the client device 104 and the processor 132 of the server 106 may be one or more devices operable to execute logic. The logic may include computer executable instructions or computer code embodied in the memory 112 of the client device 104, the memory 134 of the server 106, or in other memory that when executed by the processor 110 and 132, cause the processor 110 and 132 to perform the features implemented by the logic. Examples of the processor 110 and 132 may include a general processor, a central processing unit, a graphics processing unit, a server device, an application specific integrated circuit (ASIC), a digital signal processor, a field programmable gate array (FPGA), a digital circuit, an analog circuit, a controller, a microcontroller, any other type of processor, or any combination thereof.

The memory 112 of the client device 104 and the memory 134 of the server 106 may be any device for storing and retrieving data or any combination thereof. The memory 112 and 134 may include any non-volatile and/or volatile memory, such as a random access memory (RAM or DRAM), solid state memory, flash memory, a read-only memory (ROM), an erasable programmable read-only memory (EPROM), and flash memory. Alternatively or in addition, the memory 112 and 134 may include an optical, magnetic (hard-drive) or any other form of data storage device.

The display device 114 may be any electro-optical device for displaying data. Examples of the display device 114 may include a liquid crystal display (LCD), an organic light-emitting diode (OLED), a cathode ray tube (CRT), an electroluminescent display, a plasma display panel (PDP), a vacuum florescent display (VFD), a touch screen or any other type of display device.

The input device 116 may be any electro-mechanical device, electro-optical device, or any other type of device that is configured to convert user inputs into electrical signals such as a mouse, joystick, trackball, camera, keyboard, keypad, wireless device, microphone for voice commands, scroll wheel, button, or touch-screen display.

The database 124 may include a memory with any electronic collection of information stored therein. The information may be organized so that the information may be accessed, managed, and updated. Examples of the database 124 may include a Relational Database Management System (RDBMS), an object-oriented database, an extensible markup language (XML) database, a file, a file system, memory structures, or other organization and storage mechanism. The database may use any type of memory and structure, such as a random access memory (RAM), a read-only memory (ROM), an erasable programmable read-only memory (EPROM), flash memory, optical memory, magnetic (hard-drive or tape) memory or other memory device.

The database 124 may include multiple databases distributed over the network 108. Alternatively or in addition, the database 124 may include multiple databases in a single device, such as the server 106.

In the example shown in FIG. 1, the application module 118 and the API selector module 120 are depicted as two distinct modules. In some examples, the API selector module 120 is included in the application module 118.

The displayed properties 126, the API properties 146, and the stored properties 148 may include any type of property. Example property types may include text, number, date, array, Boolean, and object.

The example in FIG. 1 shows some components in the memory 112 of the client device 104 and other components in the memory 134 of the server 106. However, the components may be in different locations than shown in FIG. 1. For example, all the components shown in the memory 134 of the server 106 may be located instead in the memory 112 of the client device.

The system 100 may be implemented with additional, different, or fewer components. For example, the system 100 may include the client device 104, but not the server 106 and the database 124.

Each module, such as the application module 118, the API selector module 120, and the API generation module 136, may be hardware or a combination of hardware and software. For example, each module may include an application specific integrated circuit (ASIC), a Field Programmable Gate Array (FPGA), a circuit, a digital logic circuit, an analog circuit, a combination of discrete circuits, gates, or any other type of hardware or combination thereof. Alternatively or in addition, each module may include memory hardware, such as a portion of the memory 112 and 134, for example, that comprises instructions executable with the processor 110 and 132 or other processor to implement one or more of the features of the module. When any one of the modules includes the portion of the memory that comprises instructions executable with the processor, the module may or may not include the processor. In some examples, each module may just be the portion of the memory 112 and 134 or other physical memory that comprises instructions executable with the processor 110 and 132 or other processor to implement the features of the corresponding module without the module including any other hardware. Because each module includes at least some hardware even when the included hardware comprises software, each module may be interchangeably referred to as a hardware module, such as the application hardware module, the API selector hardware module, and the API generation hardware module.

Some features are shown stored in a computer readable storage medium (for example, as logic implemented as computer executable instructions or as data structures in memory). All or part of the system and its logic and data structures may be stored on, distributed across, or read from one or more types of computer readable storage media. Examples of the computer readable storage medium may include a hard disk, a floppy disk, a CD-ROM, a flash drive, a cache, volatile memory, non-volatile memory, RAM, flash memory, or any other type of computer readable storage medium or storage media. The computer readable storage medium may include any type of non-transitory computer readable medium, such as a CD-ROM, a volatile memory, a non-volatile memory, ROM, RAM, or any other suitable storage device.

The processing capability of the system 100 may be distributed among multiple entities, such as among multiple processors and memories, optionally including multiple distributed processing systems. Parameters, databases, and other data structures may be separately stored and managed, may be incorporated into a single memory or database, may be logically and physically organized in many different ways, and may implemented with different types of data structures such as linked lists, hash tables, or implicit storage mechanisms. Logic, such as programs or circuitry, may be combined or split among multiple programs, distributed across several memories and processors, and may be implemented in a library, such as a shared library.

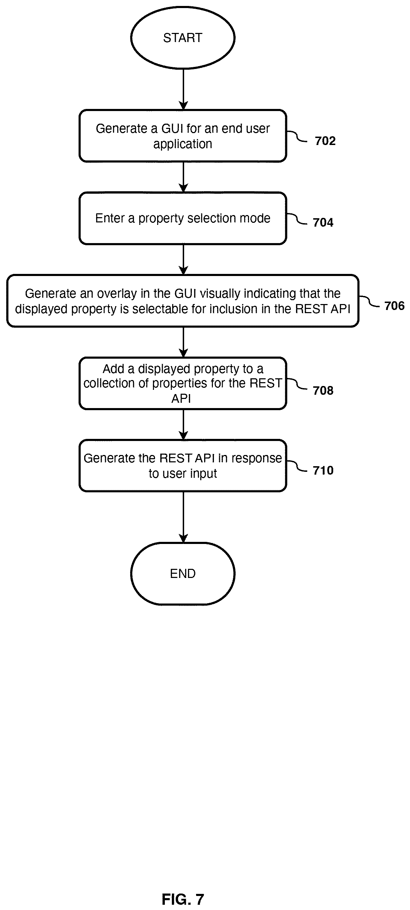

FIG. 7 illustrates an example flow diagram of the logic of the system 100 for generation of the REST API 102. The logic may include additional, different, or fewer operations than illustrated in FIG. 7. Alternatively or in addition, the operations may be executed in a different order than illustrated.

Operations may start where the GUI 122 for an end user application is generated (702). The GUI 122 includes a displayed property, such as the displayed properties 126 shown in FIGS. 3 and 4. The displayed property may correspond to one or more of the stored properties 148 retrieved from the database 124

Next, the property selection mode 302 of the GUI 122 may be entered (704) in response to user input. The user input may be, for example, a selection of the selector graphical control element 204 in the GUI 122.

When entering the property selection mode 302, the overlay 304 may be generated (706) in the GUI 122, visually indicating that the displayed property - and in some examples, any other of the displayed properties 126 - is selectable for inclusion in the REST API 102.

The displayed property 126 may be added (708) to the collection 128 of properties for the REST API 102 in response to a selection of the displayed property 126 while the GUI 122 is in the property selection mode 302.

Operations may end with, for example, generation (710) of the REST API 102 in response to user input. The API properties 146 of the generated REST API 102 may include all properties added to the collection 128 of properties while in the property selection mode 302. In still other examples, operations may end with, for example, generation of the REST API document 150.

In some examples, the API generation module 136 may provision credentials with permissions to access the database 124, services, systems, entities, and/or properties as needed to execute the REST API 102. The credentials may then be used to invoke the REST API 102.

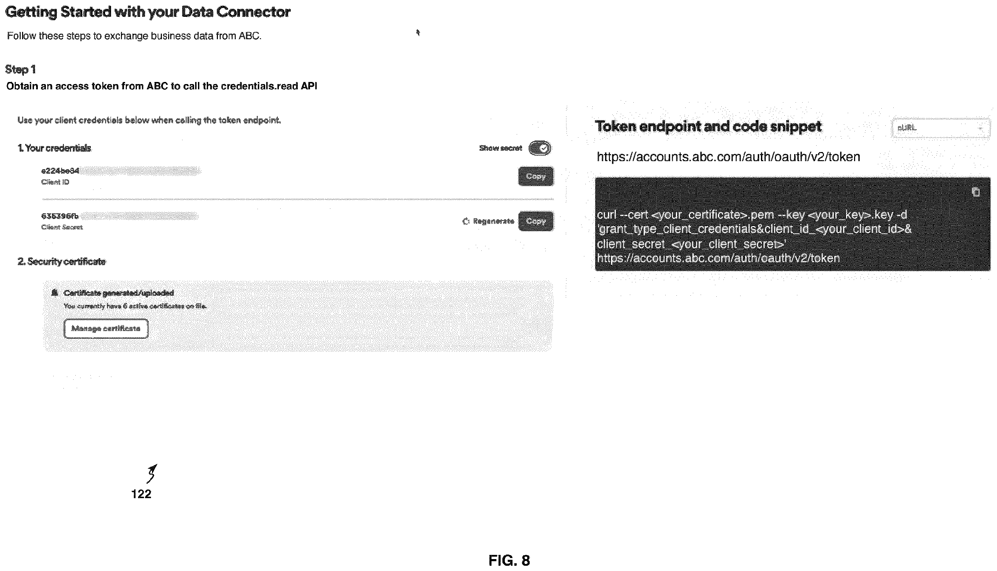

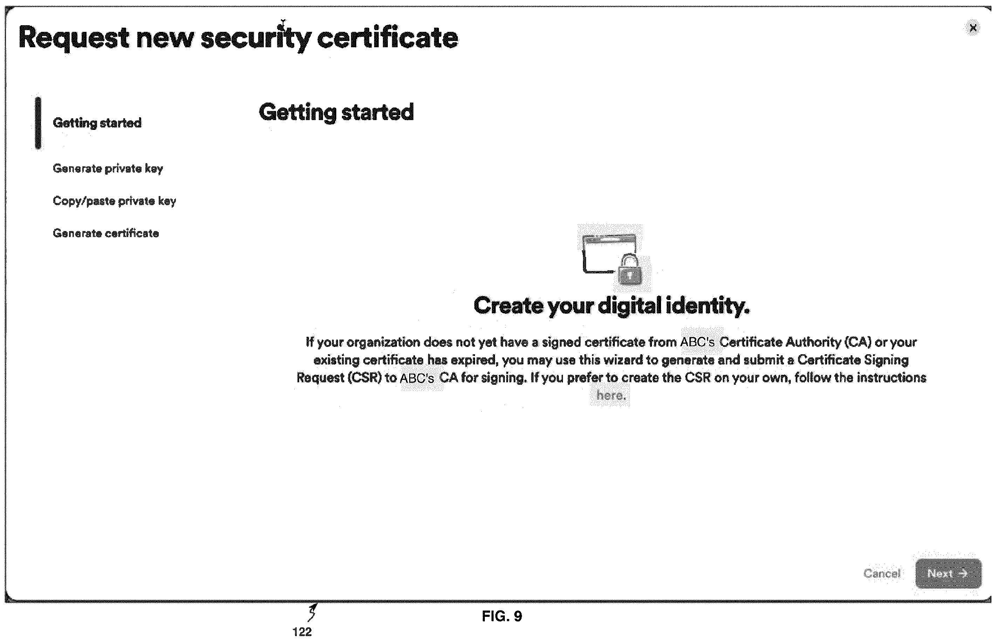

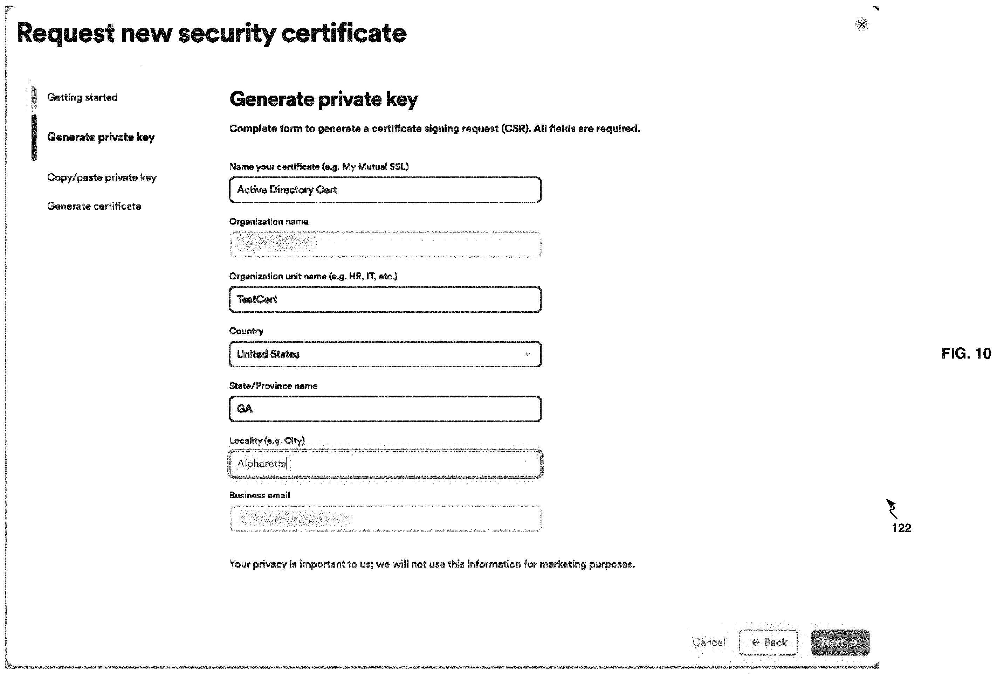

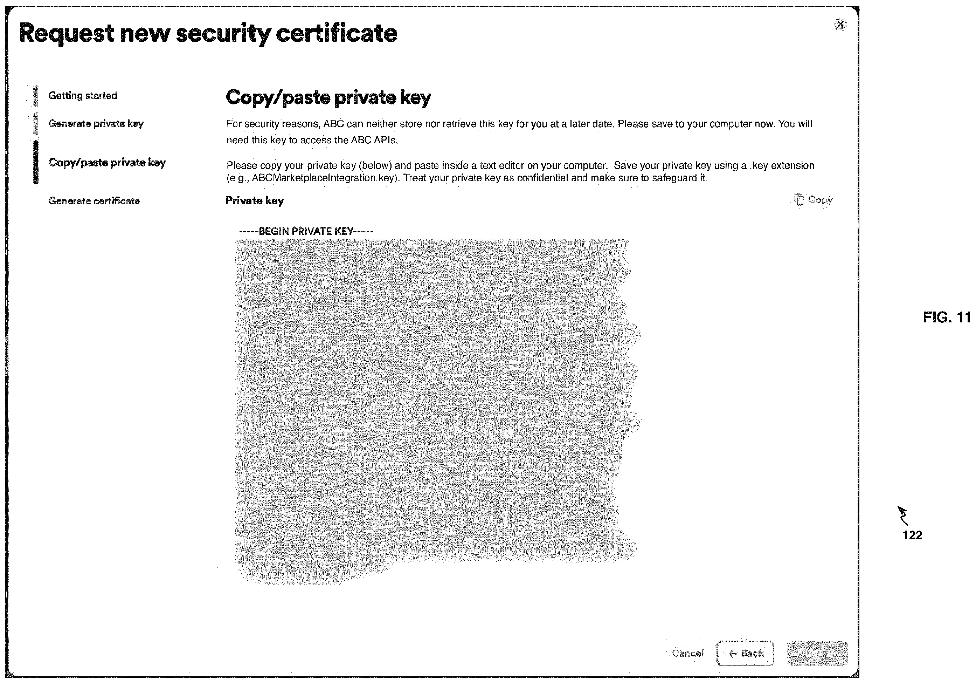

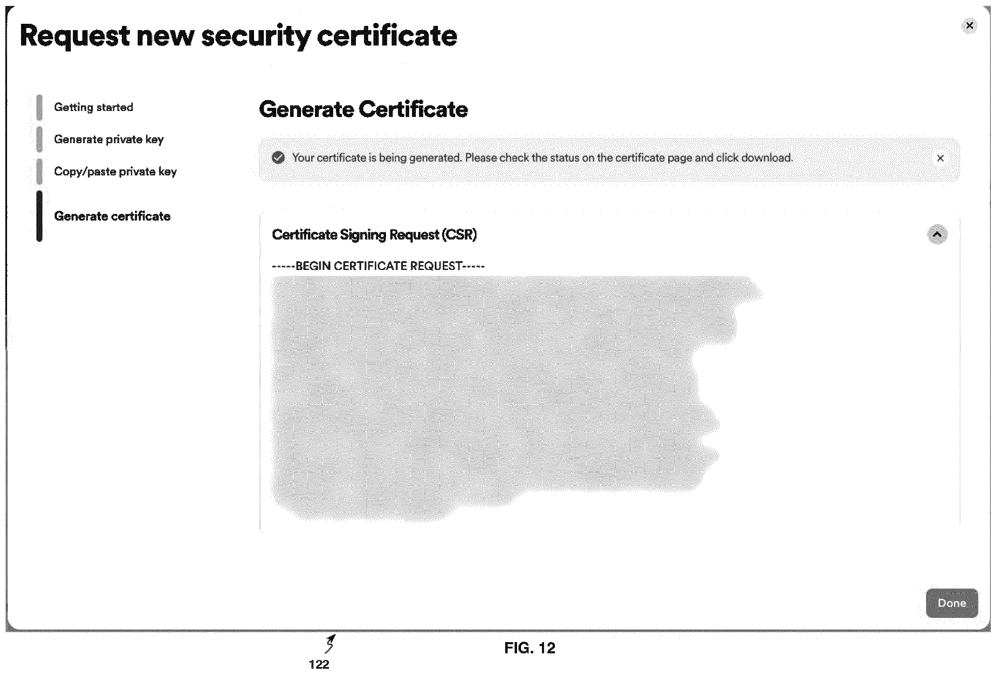

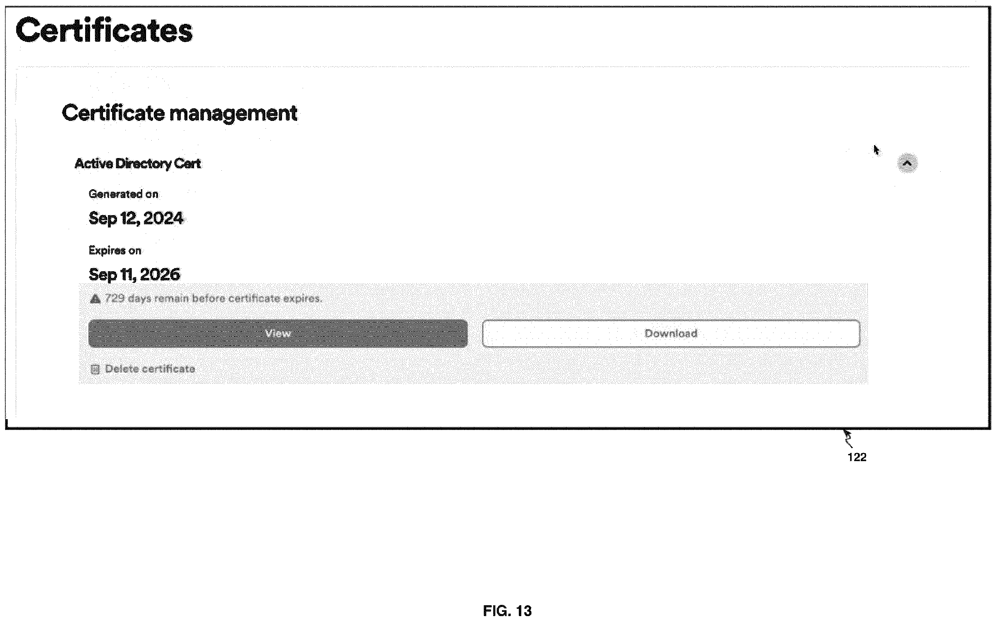

FIGS. 8 to 13 illustrate an example of a procedure for creating the credentials and using the credentials with the REST API 102. FIG. 8 illustrates an example of obtaining the credentials in the form of a token based on a certificate, private key, a client identifier, and a client secret. FIG. 9 illustrates an example of the GUI 122 for getting started with a request for a new certificate. FIG. 10 illustrates an example of the GUI 122 for generating the private key. FIG. 11 illustrates an example of the GUI 122 for obtaining the private key that was generated. FIG. 12 illustrates an example of the GUI 122 for indicating the certificate is being generated. FIG. 13 illustrates an example of the GUI 122 for viewing or downloading the generated certificate.

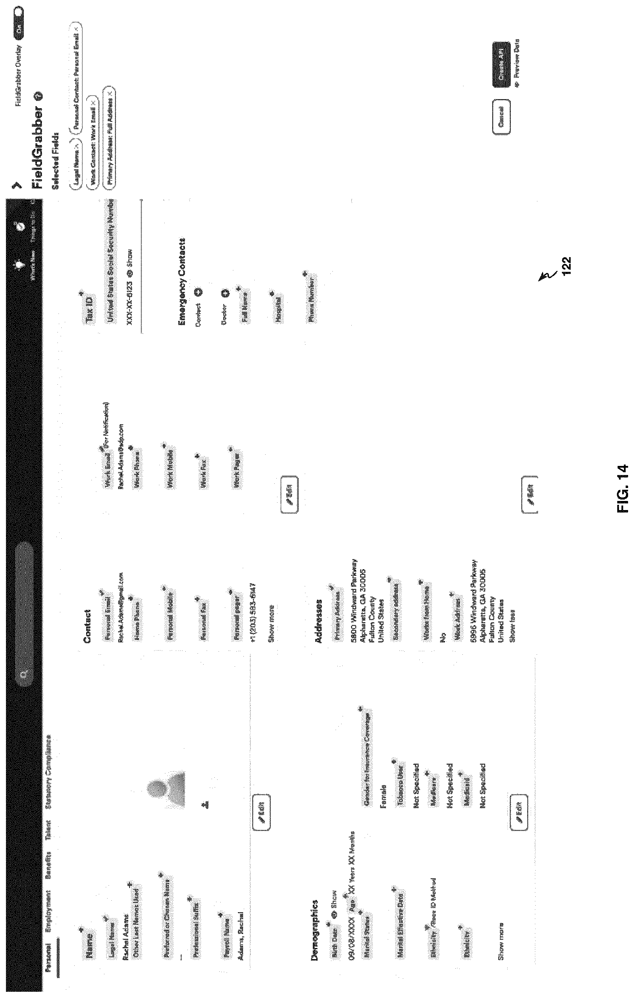

FIGS. 14 to 17 illustrate an example of the REST API 102 being created to synchronize employee data to Active Directory and asset management systems when onboarding and/or offboarding of employees. In this example use case, the REST API 102 will be named "Active Directory Sync."

The use case may begin by entering the property selection mode 302 of the GUI 122. For example, the selector graphical control element 204 as shown in FIG. 2 may be selected, causing the API selector module 120 to enter the property selection mode 302.

FIG. 14 illustrates an example of the GUI 122 for selecting fields from an employee profile. In the illustrated example, the fields for legal name, personal email, work email, and primary address of the employee were selected in the property selection mode 302 and, thus, added to the collection 128 of displayed properties 126.

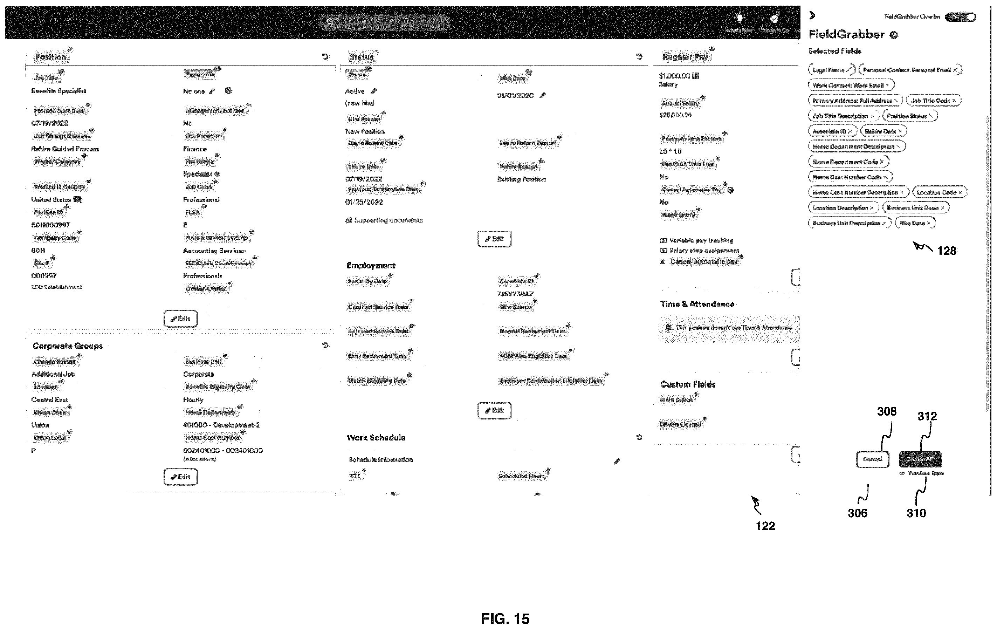

After selecting these fields, the user may navigate to the employee's employment profile. FIG. 15 illustrates an example of the GUI 122 displaying the employee's employment profile and related fields. In the illustrated example, the employee's employment profile fields for job title code, job title description, position status, associate ID, rehire data, home department description, home department code, home cost number code, home cost number description, location code, location description, business unit code, business unit description, and hire date are selected for inclusion in the collection 128 of displayed properties 126. At this point, 18 fields are included in the collection 128 of displayed properties 126.

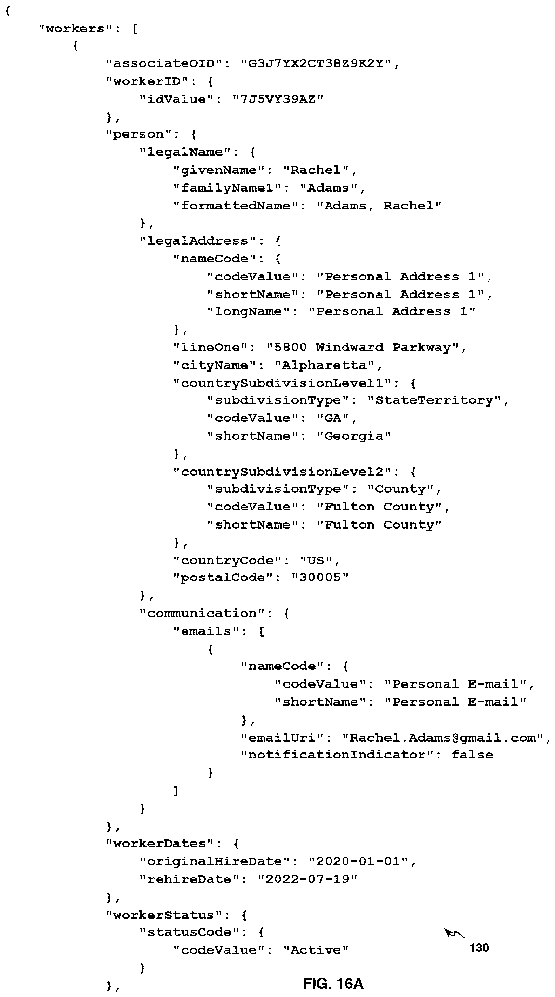

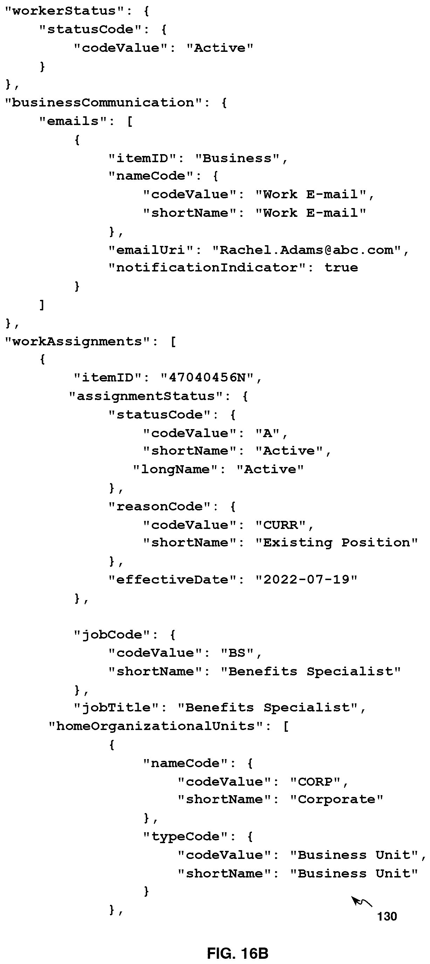

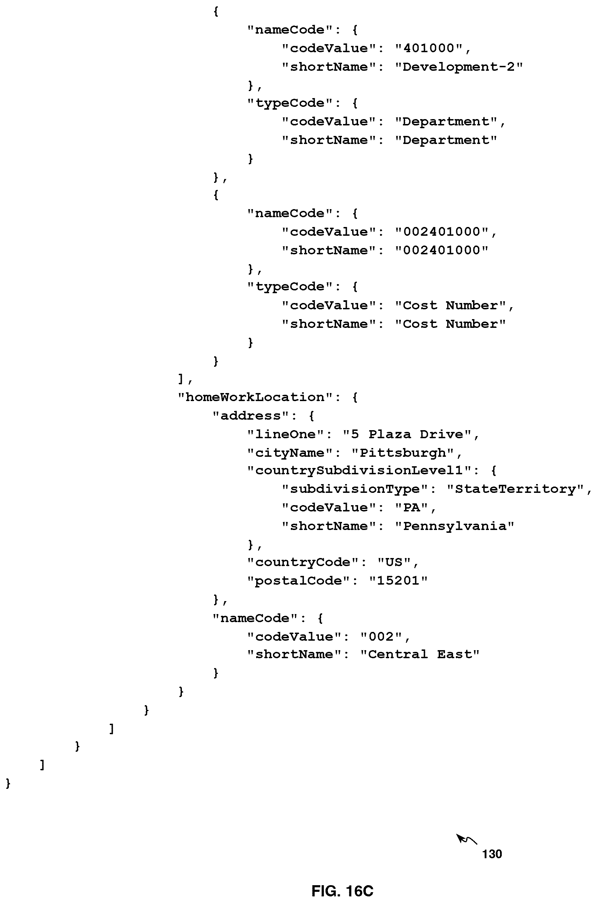

If the user selects the preview API control 310, then a new window or tab may appear that shows the REST API preview 130 in the form of a JSON document or other type of document. FIGS. 16A-16C illustrate an example of the REST API preview 130 in the form of a JSON document.

Once satisfied with the collection 128 of displayed properties 126 selected, a user may select the create API control 312, causing the create API form 600 to be displayed.

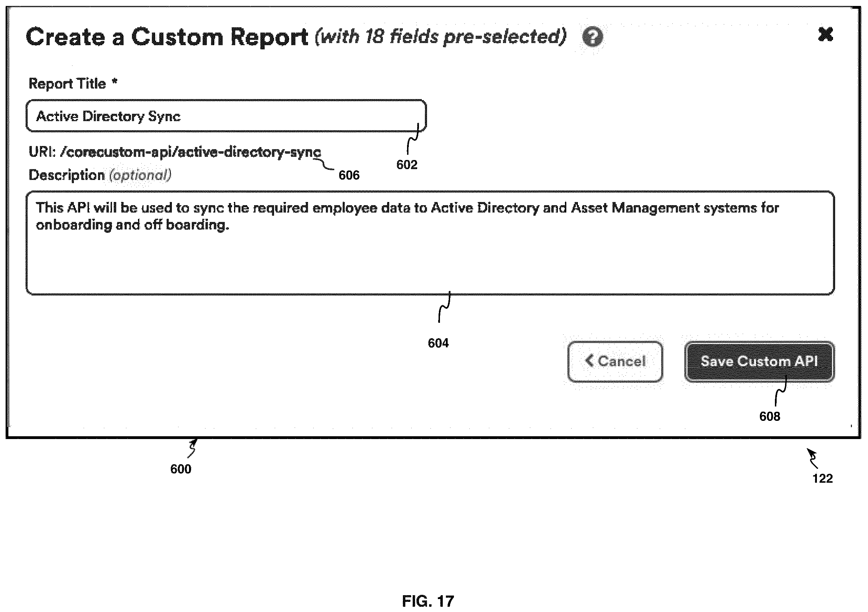

FIG. 17 illustrates an example of the create API form 600 generated by the API selector module 120 in the GUI 122 to gather information for the creation of the REST API 102. The create API form 600 in the illustrated example enables input of the API name 602 and the API description 604. In some examples, the API selector module 120 may generate the URI 606 derived from the API name 602 and include the URI 606 in the create API form 600. The save custom API graphical interface control 608, such as a button, when selected, may cause the API selector module 120 to generate, or send a request to the server 106 to generate, the REST API 102. After creation of the REST API 102, the REST API 102 may be accessible at the URI 606.

All of the discussion, regardless of the particular implementation described, is exemplary in nature, rather than limiting. For example, although selected aspects, features, or components of the implementations are depicted as being stored in memories, all or part of the system or systems may be stored on, distributed across, or read from other computer readable storage media, for example, secondary storage devices such as hard disks, flash memory drives, floppy disks, and CD-ROMs. Moreover, the various modules and screen display functionality is but one example of such functionality and any other configurations encompassing similar functionality are possible.

The respective logic, software or instructions for implementing the processes, methods and/or techniques discussed above may be provided on computer readable storage media. The functions, acts or tasks illustrated in the figures or described herein may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like. In one example, the instructions are stored on a removable media device for reading by local or remote systems. In other examples, the logic or instructions are stored in a remote location for transfer through a computer network or over telephone lines. In yet other examples, the logic or instructions are stored within a given computer, central processing unit ("CPU"), graphics processing unit ("GPU"), or system.

Furthermore, although specific components are described above, methods, systems, and articles of manufacture described herein may include additional, fewer, or different components. For example, a processor may be implemented as a microprocessor, microcontroller, application specific integrated circuit (ASIC), discrete logic, or a combination of other type of circuits or logic. Similarly, memories may be DRAM, SRAM, Flash or any other type of memory. Flags, data, databases, tables, entities, and other data structures may be separately stored and managed, may be incorporated into a single memory or database, may be distributed, or may be logically and physically organized in many different ways. The components may operate independently or be part of a same program or apparatus. The components may be resident on separate hardware, such as separate removable circuit boards, or share common hardware, such as a same memory and processor for implementing instructions from the memory. Programs may be parts of a single program, separate programs, or distributed across several memories and processors.

A second action may be said to be "in response to" a first action independent of whether the second action results directly or indirectly from the first action. The second action may occur at a substantially later time than the first action and still be in response to the first action. Similarly, the second action may be said to be in response to the first action even if intervening actions take place between the first action and the second action, and even if one or more of the intervening actions directly cause the second action to be performed. For example, a second action may be in response to a first action if the first action includes setting a Boolean variable to true and the second action is initiated if the Boolean variable is true.

To clarify the use of and to hereby provide notice to the public, the phrases "at least one of <A>, <B>, ... and <N>" or "at least one of <A>, <B>, ... or <N>" or "at least one of <A>, <B>, ... <N>, or combinations thereof" or "<A>, <B>, ... and/or <N>" are defined by the Applicant in the broadest sense, superseding any other implied definitions hereinbefore or hereinafter unless expressly asserted by the Applicant to the contrary, to mean one or more elements selected from the group comprising A, B, ... and N. In other words, the phrases mean any combination of one or more of the elements A, B, ... or N including any one element alone or the one element in combination with one or more of the other elements which may also include, in combination, additional elements not listed. Unless otherwise indicated or the context suggests otherwise, as used herein, "a" or "an" means "at least one" or "one or more."

While various examples have been described, it will be apparent to those of ordinary skill in the art that many more examples and implementations are possible. Accordingly, the examples and implementations described herein are descriptive, but not the only possible examples and implementations.

The subject-matter of the disclosure may also relate, among others, to the following aspects:
A first aspect relates to a system for generation of a REST API (Representational State Transfer Application Programming Interface), the system comprising a processor and a memory, the memory including: an application module executable by the processor to generate a graphical user interface for an end user application, wherein the graphical user interface includes a displayed property, wherein the displayed property corresponds to a stored property from a database; an API selector module executable by the processor to enter a property selection mode of the graphical user interface in response to a first user input, and to add the displayed property to a collection of properties for the REST API in response to a selection of the displayed property while in the property selection mode; and an API generation module executable by the processor, in response to a second user input, to generate the REST API based on the collection of properties.

A second aspect relates to the system of aspect 1, wherein the API selector module is executable by the processor to exit the property selection mode of the graphical user interface in response to a third user input.

A third aspect relates to the system of any preceding aspect, wherein the API generation module is executable by the processor to generate a REST API document that includes documentation of the REST API.

A fourth aspect relates to the system of aspect 3, wherein the REST API document is an OpenAPI document.

A fifth aspect relates to the system of any preceding aspect, wherein the API selector module is executable by the processor to include a properties graphical control element in the graphical user interface and to include the collection of properties in the properties graphical control element.

A sixth aspect relates to the system of any preceding aspect, wherein the API selector module is executable by the processor to generate a REST API preview which includes results of a fetch issued to the REST API and/or simulated results of a fetch issued to the REST API.

A seventh aspect relates to the system of any preceding aspect, wherein the API selector module is executable by the processor to add the displayed property to the collection of properties for the REST API in response to a selection of the displayed property in an editable text field while in the property selection mode.

An eight aspect relates to a tangible computer readable storage medium comprising a plurality of computer executable instructions, the computer executable instructions executable by a processor, the computer executable instructions comprising: instructions executable to generate a graphical user interface for an end user application, wherein the graphical user interface includes a displayed property, wherein the displayed property corresponds to a stored property stored in a database; instructions executable to enter a property selection mode of the graphical user interface in response to a first user input, and to add the displayed property to a collection of properties for a REST API (Representational State Transfer Application Programming Interface) in response to a selection of the displayed property while in the property selection mode; and instructions executable to generate, in response to a second user input, the REST API having an API property corresponding to the displayed property in the collection of properties.

A ninth aspect relates to the computer readable storage medium of aspect 8, wherein API properties of the REST API are limited to displayed properties in the collection of properties.

A tenth aspect relates to the computer readable storage medium of any preceding aspect, further comprising instructions executable to generate documentation of the REST API.

An eleventh aspect relates to the computer readable storage medium of any preceding aspect, further comprising instructions executable to persist the collection of properties across pages of the graphical user interface so that the collection of properties includes displayed properties selected from multiple pages of the graphical user interface.

A twelfth aspect relates to the computer readable storage medium of any preceding aspect, further comprising instructions executable to include a properties graphical control element in the graphical user interface and to include the collection of properties in the properties graphical control element.

A thirteenth aspect relates to the computer readable storage medium of any preceding aspect, wherein a properties graphical control element in the graphical user interface is configured to remove any selected display properties from the collection of properties.

A fourteenth aspect relates to the computer readable storage medium of any preceding aspect, further comprising instructions executable to operate as a service that dynamically implements the REST API and any other API having a definition included in a set of REST API definitions.

A fifteenth aspect relates to a computer-implemented method for generation of a REST API (Representational State Transfer Application Programming Interface), the method comprising: generating a graphical user interface for an end user application, wherein the graphical user interface includes a displayed property, wherein the displayed property corresponds to a stored property retrieved from a database; entering a property selection mode of the graphical user interface in response to a first user input; adding the displayed property to a collection of properties for the REST API in response to a selection of the displayed property while in the property selection mode; and generating the REST API in response to a second user input, wherein API properties of the REST API include all properties added to the collection of properties.

A sixteenth aspect relates to the method of aspect 15 further comprising persisting the collection of properties across a plurality of pages of the graphical user interface; and adding displayed properties from the pages to the collection of properties while in the property selection mode navigating through the pages.

A seventeenth aspect relates to the method of any preceding aspect, further comprising generating an overlay in the graphical user interface visually indicating that the displayed property is selectable for inclusion in the REST API.

An eighteenth aspect relates to the method of any preceding aspect, wherein generating the REST API includes sending a request to a server to generate the REST API.

A nineteenth aspect relates to the method of any preceding aspect further comprising generating a REST API preview, the REST API preview including results of a fetch issued to the REST API and/or simulated results of a fetch issued to the REST API.

A twentieth aspect relates to the method of any preceding aspect, wherein the selection of the displayed property includes a selection of an editable text field for the displayed property.

In addition to the features mentioned in each of the independent aspects enumerated above, some examples may show, alone or in combination, the optional features mentioned in the dependent aspects and/or as disclosed in the description above and shown in the figures.

## Claims

1. A system for generation of a REST API (Representational State Transfer Application Programming Interface), the system comprising a processor and a memory, the memory including:
an application module executable by the processor to generate a graphical user interface for an end user application, wherein the graphical user interface includes a displayed property, wherein the displayed property corresponds to a stored property from a database;
an API selector module executable by the processor to enter a property selection mode of the graphical user interface in response to a first user input, and to add the displayed property to a collection of properties for the REST API in response to a selection of the displayed property while in the property selection mode; and
an API generation module executable by the processor, in response to a second user input, to generate the REST API based on the collection of properties.

2. The system of claim 1, wherein the API selector module is executable by the processor to exit the property selection mode of the graphical user interface in response to a third user input and/or
wherein the API generation module is executable by the processor to generate a REST API document that includes documentation of the REST API.

3. The system of claim 2, wherein the REST API document is an OpenAPI document.

4. The system of any of claims 1 to 3, wherein the API selector module is executable by the processor to include a properties graphical control element in the graphical user interface and to include the collection of properties in the properties graphical control element and/or
wherein the API selector module is executable by the processor to generate a REST API preview which includes results of a fetch issued to the REST API and/or simulated results of a fetch issued to the REST API and/or
wherein the API selector module is executable by the processor to add the displayed property to the collection of properties for the REST API in response to a selection of the displayed property in an editable text field while in the property selection mode.

5. A tangible computer readable storage medium comprising a plurality of computer executable instructions, the computer executable instructions executable by a processor, the computer executable instructions comprising:
instructions executable to generate a graphical user interface for an end user application, wherein the graphical user interface includes a displayed property, wherein the displayed property corresponds to a stored property stored in a database;
instructions executable to enter a property selection mode of the graphical user interface in response to a first user input, and to add the displayed property to a collection of properties for a REST API (Representational State Transfer Application Programming Interface) in response to a selection of the displayed property while in the property selection mode; and
instructions executable to generate, in response to a second user input, the REST API having an API property corresponding to the displayed property in the collection of properties.

6. The computer readable storage medium of claim 5, wherein API properties of the REST API are limited to displayed properties in the collection of properties.

7. The computer readable storage medium of claim 5 or 6 further comprising instructions executable to generate documentation of the REST API and/or further comprising instructions executable to persist the collection of properties across pages of the graphical user interface so that the collection of properties includes displayed properties selected from multiple pages of the graphical user interface and/or
further comprising instructions executable to include a properties graphical control element in the graphical user interface and to include the collection of properties in the properties graphical control element.

8. The computer readable storage medium of any of claims 5 to 7, wherein a properties graphical control element in the graphical user interface is configured to remove any selected display properties from the collection of properties.

9. The computer readable storage medium of any of claims 5 to 8 further comprising instructions executable to operate as a service that dynamically implements the REST API and any other API having a definition included in a set of REST API definitions.

10. A computer-implemented method for generation of a REST API (Representational State Transfer Application Programming Interface), the method comprising:
generating a graphical user interface for an end user application, wherein the graphical user interface includes a displayed property, wherein the displayed property corresponds to a stored property retrieved from a database;
entering a property selection mode of the graphical user interface in response to a first user input;
adding the displayed property to a collection of properties for the REST API in response to a selection of the displayed property while in the property selection mode; and
generating the REST API in response to a second user input, wherein API properties of the REST API include all properties added to the collection of properties.

11. The method of claim 10 further comprising persisting the collection of properties across a plurality of pages of the graphical user interface; and adding displayed properties from the pages to the collection of properties while in the property selection mode navigating through the pages.

12. The method of any of claims 10 or 11 further comprising generating an overlay in the graphical user interface visually indicating that the displayed property is selectable for inclusion in the REST API.

13. The method of any of claims 10 to 12, wherein generating the REST API includes sending a request to a server to generate the REST API.

14. The method of any of claims 10 to 13 further comprising generating a REST API preview, the REST API preview including results of a fetch issued to the REST API and/or simulated results of a fetch issued to the REST API.

15. The method of any of claims 10 to 14, wherein the selection of the displayed property includes a selection of an editable text field for the displayed property.
